# EUROPÄISCHE PATENTSCHRIFT

(11) **EP 3 172 023 B1**
(45) Veröffentlichungstag und Bekanntmachung des Hinweises auf die Patenterteilung: **17.02.2021**
(21) Anmeldenummer: 15734639.6
(22) Anmeldetag: 01.07.2015
(51) Int. Cl.: B29C 45/16, B29L 31/00

(54) **VERFAHREN ZUR HERSTELLUNG EINER HAUSGERÄTEKOMPONENTE SOWIE EINE SOLCHE HAUSGERÄTEKOMPONENTE**
PROCESS FOR MANUFACTURING A HOUSEHOLD DEVICE COMPONENT AND SUCH A HOUSEHOLD DEVICE COMPONENT
PROCÉDÉ POUR LA FABRICATION D'UN ÉLÉMENT D'UN APPAREIL MÉNAGER

(30) Priorität: 21.07.2014 DE 102014214105
(43) Veröffentlichungstag der Anmeldung: 31.05.2017
(73) Patentinhaber: BSH Hausgeräte GmbH, 81739 München (DE)
(72) Erfinder: FURTH, Brigitte, 89518 Heidenheim (DE); HEISSWOLF, Tobias, 89428 Syrgenstein (DE); RAAB, Alfred, 73460 Hüttlingen (DE)
(86) Internationale Anmeldenummer: PCT/EP2015/064965
(87) Internationale Veröffentlichungsnummer: WO 2016/012210

(56) Entgegenhaltungen:
- EP-A1- 1 640 134
- EP-A1- 2 664 433
- EP-A2- 2 717 549
- WO-A1-89/07219
- CN-U- 202 742 712
- DE-A1- 10 154 543
- DE-A1- 10 252 163
- DE-A1-102005 028 355
- DE-A1-102007 061 241
- DE-A1-102008 042 815
- DE-A1-102010 040 364
- DE-A1-102012 003 375
- DE-A1-102012 110 148
- US-A1- 2010 033 400
- US-A1- 2011 135 934
- US-A1- 2011 236 577
- US-A1- 2012 043 702
- BURKLE E ET AL: "VERBUNDBAUTEILE MIT MEHRPROZESSANLAGEN WIRTSCHAFTLICH HERSTELLEN", KUNSTOFFE, CARL HANSER VERLAG, MUNCHEN, DE, Bd. 81, Nr. 3, 1. März 1991 (1991-03-01), Seiten 192-198, XP000287480, ISSN: 0023-5563

## Beschreibung

Die Erfindung geht aus von einem Kältegerätekomponentenherstellverfahren nach dem Oberbegriff des Anspruchs 1.

Aus dem Stand der Technik sind Kältegerätekomponentenherstellverfahren zur Herstellung einer Kunststofftürblende und/oder eines Türabstellers für einen Kühlschrank bekannt. Die Kältegerätekomponenten umfassen dabei einen Grundkörper, welcher in einem Thermoformverfahren hergestellt sein kann, und eine an einer Außenseite des Grundkörpers angeordnete Lack- und/oder Schutzschich DE 10 2010 040364 beschreibt ein Mehrkomponenten-Spritzgießverfahren zur Herstellung einer Innenverkleidung einer Kühlschranktür mit umspritzten Verstärkungsteilen oder stoffschlüssig eingebundenen Dekor- und/oder Funktionselemente. DE 10 2008 042815 beschreibt allgemein ein Mehrkomponenten-Spritzgießverfahren zur Herstellung von Haushalts-Kältegeräten, z.

B. Kühlschrank oder Gefrierschrank, sowie des weiteren Gehäuse für Waschmaschinen, Wäschetrockner oder Geschirrspüler, wobei die Dekorschicht auf den Grundformkörper aufgespritzt/überflutet ist.

Die Aufgabe der Erfindung besteht insbesondere darin, ein Hausgerätekomponentenherstellverfahren vorteilhaft weiterzuentwickeln. Die Aufgabe wird durch die kennzeichnenden Merkmale des Patentanspruchs 1 gelöst, während vorteilhafte Ausgestaltungen und Weiterbildungen der Erfindung den Unteransprüchen entnommen werden können.

Die Erfindung geht aus von einem Hausgerätekomponentenherstellverfahren, in Form eines Kältegerätekomponentenherstellverfahrens, zur Herstellung einer Hausgerätekomponente, welche zumindest einen Grundkörper und zumindest eine an wenigstens einem Oberflächenteilbereich des zumindest einen Grundkörpers angeordnete Schichteinheit umfasst.

Es wird vorgeschlagen, dass die Hausgerätekomponente in einem Mehrkomponenten-Spritzgussverfahren, insbesondere einem Zweikomponenten-Spritzgussverfahren und vorzugsweise in einem Dreikomponenten-Spritzgussverfahren, hergestellt wird.

Unter einer "Hausgerätekomponente" soll insbesondere ein vorzugsweise einstückiges Bauteil eines Hausgeräts verstanden werden. Die Hausgerätekomponente könnte beispielsweise als Ablageelement, Türabsteller, Auszugsschale, Hausgerätetürkomponente ausgebildet sein. Vorzugsweise ist die Hausgerätekomponente als Hausgerätetürfrontblende ausgebildet. Ferner ist das Hausgerät als Haushaltskältegerät, insbesondere als Kühl- und/oder Gefriergerät, wie beispielsweise als Kühlschrank, Kühltruhe, Gefrierschrank, Gefriertruhe, Kühlgefrierkombination und/oder Weinlagerschrank ausgebildet. Unter einer "Hausgerätetürfrontblende" soll dabei insbesondere ein in einem geschlossenen Zustand des Hausgeräts äußerer Teil einer Hausgerätetüre verstanden werden. Insbesondere kann eine Hausgerätetür dabei zumindest eine Hausgerätetürfrontblende umfassen. Vorzugsweise umfasst die Hausgerätetüre ferner zumindest eine Hausgerätetürrückblende sowie wenigstens ein Isoliermaterial, welches vorzugsweise zwischen der zumindest einen Hausgerätetürfrontblende und der zumindest einen Hausgerätetürrückblende angeordnet ist.

Unter einem "Grundkörper" soll insbesondere ein Element verstanden werden, welches wenigstens 60 %, insbesondere zumindest 70 %, vorzugsweise mindestens 80 % und besonders vorteilhaft wenigstens 90 % einer Gesamtmasse der Hausgerätekomponente einnimmt. Insbesondere ist der Grundkörper als Spritzgussteil ausgebildet. Vorzugsweise besteht der Grundkörper zumindest im Wesentlichen aus Kunststoff. Besonders bevorzugt besteht der Grundkörper zumindest im Wesentlichen aus einem Thermoplast. Darunter, dass ein Objekt "zumindest im Wesentlichen" aus einem Material besteht, soll in diesem Zusammenhang insbesondere verstanden werden, dass das Objekt mit einem Massenanteil von zumindest 65 %, vorteilhaft zumindest 75 %, vorzugsweise zumindest 85 % und besonders bevorzugt zumindest 95 % aus dem Material besteht. Ferner soll unter einem "Oberflächenteilbereich" insbesondere ein Bereich einer Oberfläche des Grundkörpers verstanden werden.

Unter einer "Schichteinheit" soll insbesondere eine Einheit verstanden werden, welche wenigstens eine Schicht, vorzugsweise genau eine Schicht, umfasst. Unter einer "Schicht" soll insbesondere ein räumliches Element verstanden werden, das an eine Form einer Oberfläche des Grundkörpers angepasst ist und insbesondere eine maximale Dicke aufweist, welche kleiner ist, als eine minimale Erstreckung des Grundkörpers. Die maximale Dicke der Schicht liegt vorteilhaft zwischen 50 µm und 1 mm, vorzugsweise zwischen 0,1 mm und 0,7 mm und besonders bevorzugt zwischen 0,2 mm und 0,5 mm. Vorzugsweise ist die zumindest eine Schichteinheit derart auf dem wenigstens einen Oberflächenteilbereich angeordnet, dass die zumindest eine Schichteinheit von einem Benutzer in zumindest einem Betriebszustand, vorzugsweise in einem geschlossenen Zustand des Hausgeräts, zumindest teilweise sichtbar ist. Vorzugsweise besteht die zumindest eine Schichteinheit, insbesondere die genau eine Schicht, aus Polyurea und/oder Polyurethan. Vorzugsweise liegt ein Material der zumindest einen Schichteinheit in zumindest einem Verfahrensschritt als ein niederviskoses Material und/oder eine niederviskose Flüssigkeit vor. In diesem Zusammenhang soll "niederviskos" insbesondere ein Material und/oder eine Flüssigkeit verstanden werden, welches/welche bei einer Temperatur von 100°C eine Viskosität von maximal 1000 mPa s (Millipascalsekunden), vorteilhaft maximal 500 mPa s, vorzugsweise maximal 100 mPa s und besonders bevorzugt maximal 10 mPa s aufweist. Darunter, dass die zumindest eine Schichteinheit an dem wenigstens einen Oberflächenteilbereich des zumindest einen Grundkörpers "angeordnet ist", soll insbesondere verstanden werden, dass wenigstens eine Schicht der zumindest einen Schichteinheit an dem wenigstens einen Oberflächenteilbereich anliegt, vorzugsweise unmittelbar. Vorzugsweise ist die wenigstens eine Schicht dabei mit dem zumindest einen Grundkörper, insbesondere dem wenigstens einen Oberflächenteilbereich, verbunden, insbesondere einstückig.

Unter einem "Spritzgussverfahren" soll insbesondere ein Verfahren zur Herstellung eines Spritzgussteils verstanden werden, bei welchem über zumindest eine Düseneinheit eine Materialkomponente, vorzugsweise ein Thermoplast, Duroplast und/oder Elastomer, in ein, insbesondere zumindest im Wesentlichen geschlossenes, Formwerkzeug unter Druck eingebracht, insbesondere eingedrückt, wird. Insbesondere ist in diesem Fall das Formwerkzeug, insbesondere zumindest ein Hohlraum und/oder zumindest eine Kavität des Formwerkzeugs, dazu vorgesehen, eine Kontur und/oder eine Oberflächenstruktur des Spritzgussteils festzulegen. Insbesondere weist das zumindest eine Formwerkzeug zumindest zwei Formwerkzeugteile auf, wobei insbesondere zumindest eines der Formwerkzeugteile beweglich ausgebildet ist und insbesondere dazu vorgesehen ist, das Formwerkzeug in zumindest einem Betriebszustand zu schließen. Insbesondere ist das Spritzgussverfahren dabei von einem einfachen Spritzverfahren, Sprühverfahren und/oder Lackierverfahren, bei welchem insbesondere ein zumindest im Wesentlichen geöffnetes Formwerkzeug verwendet werden kann, verschieden. Unter einem "zumindest im Wesentlichen geschlossenen" Formwerkezug soll in diesem Zusammenhang insbesondere ein Formwerkzeug verstanden werden, welches in zumindest einem Verfahrensschritt, vorzugsweise in zumindest einem Verfahrensschritt, in welchem der zumindest eine Grundkörper hergestellt wird, zumindest einen Hohlraum und/oder zumindest eine Kavität, insbesondere zumindest einen Hohlraum und/oder zumindest eine Kavität, welche zu einer Herstellung zumindest eines Spritzgussteils vorgesehen ist, vorzugsweise den zumindest einen Grundkörper, mit einem Oberflächenanteil von zumindest 85 %, vorzugsweise von zumindest 90 % und besonders bevorzugt von zumindest 95 % umgibt. Unter einem "zumindest im Wesentlichen geöffneten" Formwerkezug soll insbesondere ein Formwerkzeug verstanden werden, welches in zumindest einem Verfahrensschritt, vorzugsweise in zumindest einem Verfahrensschritt, in welchem zumindest ein Bauteil hergestellt wird, zumindest einen Hohlraum und/oder zumindest eine Kavität, insbesondere zumindest einen Hohlraum und/oder zumindest eine Kavität, welche zu einer Herstellung des zumindest einen Bauteils vorgesehen ist, mit einem Oberflächenanteil von höchstens 75 % umgibt.

Ferner soll unter einem "Mehrkomponenten-Spritzgussverfahren" insbesondere ein Spritzgussverfahren verstanden werden, bei welchem mehrere, insbesondere zumindest zwei, vorzugsweise zumindest drei, insbesondere verschiedene, Materialkomponenten verwendet werden. Vorzugsweise werden in diesem Fall zumindest zwei, vorzugsweise voneinander verschiedene, Formwerkzeuge verwendet. Alternativ ist auch denkbar, ein einzelnes Formwerkzeug zumindest teilweise zu öffnen, um dadurch insbesondere zumindest eine zweite Form herzustellen und/oder zumindest eine Formänderung zu erreichen. Unter einem "Zweikomponenten-Spritzgussverfahren" soll dabei insbesondere ein Spritzgussverfahren, insbesondere ein Mehrkomponenten-Spritzgussverfahren, verstanden werden, bei welchem zwei, insbesondere verschiedene, Materialkomponenten verwendet werden. Ferner soll unter einem "Dreikomponenten-Spritzgussverfahren" insbesondere ein Spritzgussverfahren, insbesondere ein Mehrkomponenten-Spritzgussverfahren, verstanden werden, bei welchem drei, insbesondere verschiedene, Materialkomponenten verwendet werden. Vorzugsweise wird der zumindest eine Grundkörper in einem ersten Verfahrensschritt durch ein erstes Spritzgussverfahren, insbesondere bei einer Temperatur von zumindest 100°C, vorzugsweise von zumindest 150°C und besonders bevorzugt von zumindest 200°C, und die zumindest eine Schichteinheit in einem darauf folgenden zweiten Verfahrensschritt durch ein zweites Spritzgussverfahren bei niedrigerer Temperatur, insbesondere bei einer Temperatur von weniger als 200°C, vorzugsweise von weniger als 150°C und besonders bevorzugt von weniger als 100°C hergestellt. Eine Zykluszeit beträgt insbesondere höchstens 5 min, vorzugsweise höchstens 2 min und besonders bevorzugt unter 1 min. Unter einer "Zykluszeit" soll in diesem Zusammenhang insbesondere eine Zeit verstanden werden, welche benötigt wird, um die Hausgerätekomponente, insbesondere genau eine Hausgerätekomponente, des Spritzgussverfahrens, insbesondere vollständig, herzustellen.

In diesem Zusammenhang soll unter "einstückig" insbesondere zumindest stoffschlüssig verbunden verstanden werden. Vorteilhaft soll unter einstückig in einem Stück und/oder aus einem einzelnen Rohling geformt verstanden werden, wie beispielsweise durch eine Herstellung in einem Mehrkomponenten-Spritzgussverfahren und/oder vorzugsweise in einem Einkomponenten-Spritzgussverfahren. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch eine solche Ausgestaltung kann ein Hausgerätekomponentenherstellverfahren vorteilhaft weiterentwickelt werden. Insbesondere können bei einer Herstellung von Hausgerätekomponenten weitere Gestaltungsmöglichkeiten, Designmöglichkeiten und/oder Kosteneinsparungen erreicht werden. Dabei kann insbesondere auch eine vorteilhafte Geometriefreiheit geschaffen werden, wodurch eine Vielfalt an unterschiedlichen Hausgerätekomponenten weiter erhöht werden kann. Ferner kann der zumindest eine Grundkörper insbesondere kostengünstig und vorteilhaft aus einem Thermoplast hergestellt werden, während die zumindest eine Schichteinheit vorteilhaft hochwertig, insbesondere mit einer hohen Oberflächenqualität und/oder einer hohen Oberflächenbrillanz, ausgebildet werden kann. Des Weiteren können verschiedene Oberflächenstrukturen mit insbesondere unterschiedlichen haptischen und/oder optischen Eigenschaften ausgebildet werden. Vorteilhaft kann ferner einer Gratbildung, insbesondere an einem Randbereich der Hausgerätekomponente und/oder des Grundkörpers, vorgebeugt werden.

Vorzugsweise wird der zumindest eine Grundkörper zumindest im Wesentlichen plattenartig ausgebildet. Unter einer "zumindest im Wesentlichen plattenartigen Ausgestaltung" eines Objekts, soll insbesondere eine Ausgestaltung des Objekts verstanden werden, bei welcher ein minimaler, das Objekt gerade noch umhüllender gedachter Quader eine längste Kante aufweist, die wenigstens 2-mal, insbesondere zumindest 5-mal, vorzugsweise mindestens 10-mal und besonders vorteilhaft wenigstens 15-mal so lang ist, wie eine kürzeste Kante des Quaders. Der zumindest eine Grundkörper weist vorteilhaft zumindest eine Frontseite, zumindest eine Rückseite und zumindest vier Seitenflanken auf. Von der längsten Kante und einer mittleren Kante aufgespannte Flächen definieren dabei die zumindest eine Frontseite und/oder die zumindest eine Rückseite. Ferner definieren von der längsten Kante und/oder von der mittleren Kante und der kürzesten Kante aufgespannte Flächen die zumindest vier Seitenflanken. Die zumindest eine Frontseite und die zumindest vier Seitenflanken definieren in diesem Fall insbesondere eine Außenfläche des zumindest einen Grundkörpers. Vorzugsweise ist eine Außenfläche des Grundkörpers zumindest im Wesentlichen glatt ausgebildet. Darunter, dass eine Außenfläche "zumindest im Wesentlichen" glatt ausgebildet ist, soll in diesem Zusammenhang insbesondere verstanden werden, dass die Außenfläche mit einem Anteil von zumindest 70 %, vorteilhaft zumindest 80 %, vorzugsweise zumindest 90 % und besonders bevorzugt zumindest 95 % makroskopisch glatt ausgebildet ist. Somit ist bei der fertiggestellten Hausgerätekomponente der zumindest eine Grundkörper zumindest im Wesentlichen plattenartig ausgebildet. Hierdurch kann eine vorteilhaft einfache Hausgerätekomponente, insbesondere Hausgerätetürfrontblende, geschaffen werden.

Wird an den zumindest einen Grundkörper eine Diffusionssperre angeformt, so kann insbesondere ein niederviskoses Material vorteilhaft einfach mit dem zumindest einen Grundkörper verbunden werden. Ferner kann eine mögliche Gratbildung, insbesondere an einem Randbereich des Grundkörpers, insbesondere bei einem Aufbringen des niederviskosen Materials, vorteilhaft verhindert werden. In diesem Zusammenhang soll unter einer "Diffusionssperre" insbesondere eine Einheit verstanden werden, welche zumindest ein Diffusionssperrelement umfasst und dazu vorgesehen ist, in zumindest einem Zustand zumindest ein niederviskoses Material und/oder zumindest eine niederviskose Flüssigkeit, vorzugsweise die zumindest eine Schichteinheit während des Spritzgussverfahrens, in einem zumindest teilweise von der Diffusionssperre definierten Bereich, insbesondere einem Oberflächenbereich, des zumindest einen Grundkörpers zu halten und/oder einzugrenzen. Insbesondere wird die Diffusionssperre zumindest in einem Vergleich zu dem wenigstens einen Oberflächenteilbereich und/oder einem Teil des wenigstens einen Oberflächenteilbereichs und/oder der wenigstens einen Schichteinheit erhöht ausgebildet. Darunter, dass ein Objekt an einem weiteren Objekt "angeformt" wird, soll insbesondere verstanden werden, dass das Objekt mit dem weiteren Objekt einstückig ausgebildet und/oder verbunden wird. Insbesondere weist die fertiggestellte Hausgerätekomponente somit die Diffusionssperre auf. Dabei ist die Diffusionssperre insbesondere mit dem zumindest einen Grundkörper verbunden, insbesondere stoffschlüssig. Vorzugsweise ist die Diffusionssperre einstückig mit dem zumindest einen Grundkörper ausgebildet. Insbesondere ist die Diffusionssperre zumindest in einem Vergleich zu dem wenigstens einen Oberflächenteilbereich und/oder einem Teil des wenigstens einen Oberflächenteilbereichs und/oder der wenigstens einen Schichteinheit erhöht ausgebildet. Demnach weist die Hausgerätekomponente den zumindest einen Grundkörper, die zumindest eine Schichteinheit und die Diffusionssperre auf.

Ferner wird vorgeschlagen, dass der wenigstens eine Oberflächenteilbereich zumindest im Wesentlichen durch die Diffusionssperre begrenzt wird. Darunter, dass ein Objekt "zumindest im Wesentlichen" von einem weiteren Objekt begrenzt wird, soll in diesem Zusammenhang insbesondere verstanden werden, dass das Objekt mit einem Längenanteil und/oder einem Flächenanteil von zumindest 90 %, vorzugsweise von zumindest 95 % und besonders bevorzugt von zumindest 99 % von dem weiteren Objekt begrenzt wird. Die Diffusionssperre begrenzt demnach bei der fertiggestellten Hausgerätekomponente zumindest im Wesentlichen den wenigstens einen Oberflächenbereich. Hierdurch ergeben sich insbesondere weitere Design- sowie Gestaltungsmöglichkeiten für die Hausgerätekomponente.

In einer Ausgestaltung der Erfindung wird vorgeschlagen, dass die Diffusionssperre zumindest teilweise, vorzugsweise zu einem Großteil und besonders bevorzugt vollständig an zumindest einer Seitenflanke des zumindest im Wesentlichen plattenartigen Grundkörpers angeformt wird. Vorzugsweise wird die Diffusionssperre mit einem Volumenanteil von zumindest 20 %, vorteilhaft von zumindest 40 %, vorzugsweise von zumindest 60 % und besonders bevorzugt von zumindest 80 % an zumindest einer Seitenflanke des zumindest im Wesentlichen plattenartigen Grundkörpers angeformt. Insbesondere ist die Diffusionssperre bei der fertiggestellten Hausgerätekomponente zumindest teilweise, vorzugsweise zu einem Großteil und besonders bevorzugt vollständig mit zumindest einer Seitenflanke des zumindest im Wesentlichen plattenartigen Grundkörpers, insbesondere stoffschlüssig, vorzugsweise einstückig, verbunden. Hierdurch kann die Diffusionssperre vorteilhaft in ein Gesamtdesign integriert werden. Dabei können vorteilhaft mögliche Funktionselemente, wie beispielsweise Lagerelemente, Griffelemente, Lagervertiefungen und/oder Griffvertiefungen, ausgespart und/oder hervorgehoben werden.

Vorzugsweise wird zumindest ein Diffusionssperrelement der Diffusionssperre kragenartig zumindest im Wesentlichen entlang der Seitenflanken des zumindest im Wesentlichen plattenartigen Grundkörpers ausgebildet. Unter der Wendung, dass das zumindest eine Diffusionssperrelement "kragenartig" ausgebildet wird, soll insbesondere verstanden werden, dass das zumindest eine Diffusionssperrelement zumindest in einer Blickrichtung senkrecht zu der zumindest einen Frontseite und/oder der zumindest einen Rückseite des zumindest einen Grundkörpers seitlich über den zumindest einen Grundkörper hervorstehend ausgebildet wird und/oder ausgebildet ist. Insbesondere weist das zumindest eine Diffusionssperrelement in diesem Fall in einem Vergleich zu dem zumindest einen Grundkörper eine wesentlich geringere Materialstärke auf. Unter "einer Wesentlich geringeren Materialstärke" soll dabei eine Materialstärke von höchstens 70 %, vorteilhaft von höchstens 50 %, vorzugsweise von höchstens 25 % und besonders bevorzugt von höchstens 10 % im Vergleich zu einer Referenzmaterialstärke verstanden werden. Darunter, dass das zumindest eine Diffusionssperrelement "zumindest im Wesentlichen entlang der Seitenflanken" ausgebildet wird, soll insbesondere verstanden werden, dass sich das zumindest eine Diffusionssperrelement zumindest entlang einer Länge von zumindest 90 %, vorzugsweise von zumindest 95 % und besonders bevorzugt von zumindest 99 % der Seitenflanken erstreckt. Vorzugsweise wird das zumindest eine Diffusionssperrelement dabei in einem Nahbereich der zumindest einen Rückseite angeformt. Unter einem "Nahbereich" soll dabei insbesondere ein räumlicher Bereich verstanden werden, dessen Punkte einen Abstand von höchstens 100 mm, vorteilhaft von höchstens 50 mm, vorzugsweise von höchstens 10 mm und besonders bevorzugt von höchstens 5 mm von einem Referenzpunkt aufweisen. Insbesondere wird dabei von dem zumindest einen Diffusionssperrelement und dem zumindest einen Grundkörper ein Aufnahmeraum für zumindest ein niederviskoses Material, insbesondere die zumindest eine Schichteinheit, zumindest teilweise gebildet. Die fertiggestellte Hausgerätekomponente weist demnach zumindest ein Diffusionssperrelement auf, welches insbesondere kragenartig ausgebildet ist und sich vorzugsweise zumindest im Wesentlichen entlang der Seitenflanken des zumindest im Wesentlichen plattenartigen Grundkörpers erstreckt. Vorzugsweise ist das zumindest eine Diffusionssperrelement dabei in dem Nahbereich der zumindest einen Rückseite angeformt. Dabei bilden das zumindest eine Diffusionssperrelement und der zumindest eine Grundkörper insbesondere ein Aufnahmeraum für die zumindest eine Schichteinheit. Hierdurch kann insbesondere ein niederviskoses Material, insbesondere die zumindest eine Schichteinheit, vorteilhaft einfach aufgebracht werden.

Des Weiteren wird vorgeschlagen, dass durch die zumindest eine Schichteinheit zumindest 10 %, vorteilhaft zumindest 15 %, vorzugsweise zumindest 20 % und besonders bevorzugt zumindest 25 % einer Oberfläche des zumindest einen Grundkörpers bedeckt wird. Vorzugsweise wird durch die zumindest eine Schichteinheit zumindest 70 %, vorteilhaft zumindest 75 %, vorzugsweise zumindest 80 % und besonders bevorzugt zumindest 90 % der Außenfläche des zumindest einen zumindest im Wesentlichen plattenartigen Grundkörpers bedeckt. Demnach bedeckt die zumindest eine Schichteinheit zumindest 10 %, vorteilhaft zumindest 15 %, vorzugsweise zumindest 20 % und besonders bevorzugt zumindest 25 % einer Oberfläche des zumindest einen Grundkörpers und/oder zumindest 70 %, vorteilhaft zumindest 75 %, vorzugsweise zumindest 80 % und besonders bevorzugt zumindest 90 % der Außenfläche des zumindest einen zumindest im Wesentlichen plattenartigen Grundkörpers. Hierdurch kann vorteilhaft ein möglichst großer Oberflächenteilbereich des zumindest einen Grundkörpers mit der zumindest einen Schichteinheit bedeckt werden.

In einer bevorzugten Ausgestaltung der Erfindung wird vorgeschlagen, dass die zumindest eine Schichteinheit als eine Hausgerätedekorblende ausgebildet wird. In diesem Zusammenhang soll unter einer "Hausgerätedekorblende" insbesondere eine von einem Benutzer sichtbare Fläche des Hausgeräts, insbesondere in einem geschlossenen Zustand des Hausgeräts, verstanden werden. Demnach ist die zumindest eine Schichteinheit der fertiggestellten Hausgerätekomponente als Hausgerätedekorblende ausgebildet. Hierdurch kann insbesondere eine Wertigkeit der Hausgerätekomponente kostengünstig gesteigert werden.

Ferner wird vorgeschlagen, dass der zumindest eine Grundkörper mit zumindest einer Vertiefung versehen wird. Vorzugsweise wird zumindest eine Seitenflanke des zumindest einen Grundkörpers mit zumindest einer Vertiefung versehen. Die zumindest eine Vertiefung kann dabei insbesondere als Lagervertiefung, insbesondere Lagerbuchse, und/oder Griffvertiefung ausgebildet werden. Ferner kann insbesondere eine die zumindest eine Vertiefung begrenzende Seitenfläche als Griffelement und/oder Lagerelement ausgebildet werden. Im vorliegenden Fall weist der zumindest eine Grundkörper, vorzugsweise zumindest eine Seitenflanke, demnach die zumindest eine Vertiefung auf. Hierdurch kann insbesondere ein Montageaufwand reduziert werden, da insbesondere auf zusätzliche Griffelemente und/oder Lagerelemente verzichtet werden kann.

Wird die zumindest eine Vertiefung durch zumindest ein Diffusionssperrelement der Diffusionssperre zumindest teilweise begrenzt und/oder abgegrenzt, kann insbesondere ein Eindringen der zumindest einen Schichteinheit in die zumindest eine Vertiefung verhindert werden. Darunter, dass die zumindest eine Vertiefung durch zumindest ein Diffusionssperrelement "zumindest teilweise begrenzt" wird, soll in diesem Zusammenhang insbesondere verstanden werden, dass die zumindest eine Vertiefung durch das zumindest eine Diffusionssperrelement zumindest in einer Blickrichtung senkrecht zu der zumindest einen Vertiefung zumindest zu 90 %, vorzugsweise zu zumindest 95 % und besonders bevorzugt zu zumindest 99 % durch das zumindest ein Diffusionssperrelement umschlossen wird. In der fertiggestellten Hausgerätekomponente begrenzt das zumindest eine Diffusionssperrelement die zumindest eine Vertiefung somit zumindest teilweise.

Gemäß einem ersten Aspekt der Erfindung ist vorgesehen, dass an wenigstens einem weiteren Oberflächenteilbereich, vorzugsweise in der zumindest einen Vertiefung, des zumindest einen Grundkörpers zumindest eine weitere Schichteinheit, vorzugsweise genau eine weitere Schicht, aufgebracht wird. Vorzugsweise wird die zumindest eine weitere Schichteinheit in demselben, insbesondere zweiten, Verfahrensschritt, insbesondere in demselben Formwerkzeug, wie die zumindest eine Schichteinheit, aufgebracht. Vorzugsweise weist die zumindest eine weitere Schichteinheit eine zu der zumindest einen Schichteinheit verschiedene Oberflächenstruktur auf, insbesondere mit unterschiedlichen haptischen und/oder optischen Eigenschaften. Demnach ist zumindest eine weitere Schichteinheit, vorzugsweise genau eine weitere Schicht, bei der fertiggestellten Hausgerätekomponente auf wenigstens einem weiteren Oberflächenteilbereich, vorzugsweise in der zumindest einen Vertiefung, des zumindest einen Grundkörpers angeordnet. Hierdurch kann insbesondere eine mechanische und/oder optische Struktur der Hausgerätekomponente vorteilhaft an verschiedene Anforderungen angepasst werden.

Gemäß diesem ersten Aspekt der Erfindung ist vorgesehen, dass die zumindest eine weitere Schichteinheit als eine Hausgerätebedienfläche ausgebildet wird. Unter einer "Hausgerätebedienfläche" soll insbesondere eine Teilfläche der Hausgerätekomponente verstanden werden, welche dazu vorgesehen ist, in zumindest einem Betriebszustand von einem Bediener berührt zu werden, vorzugsweise zu einer Bedienung von Touch-Controls und besonders vorteilhaft zu einem Öffnen und/oder Schließen des Hausgeräts. Vorzugsweise wird die zumindest eine Hausgerätebedienfläche als Teil und/oder Oberfläche zumindest eines Griffelements ausgebildet. Die zumindest eine weitere Schichteinheit ist somit bei der fertiggestellten Hausgerätekomponente als Hausgerätebedienfläche, vorzugsweise als Teil und/oder Oberfläche des zumindest einen Griffelements, ausgebildet. Hierdurch kann insbesondere vorteilhaft ein kostengünstiges und einfaches Griffelement bereitgestellt werden, insbesondere ohne einen Montageaufwand zu erhöhen.

Gemäß einem zweiten Aspekt der Erfindung wird die zumindest eine Schichteinheit, insbesondere in einem auf den zweiten Verfahrensschritt folgenden dritten Verfahrensschritt, zumindest teilweise entfernt, wodurch vorteilhaft einfach Dekorelemente auf einer Hausgerätekomponente appliziert werden können. Die zumindest eine Schichteinheit kann dabei durch einen beliebigen einem Fachmann als sinnvoll erscheinenden Prozess zumindest teilweise entfernet werden, wie beispielsweise durch einen Laser und/oder eine mechanische, insbesondere eine abrasive, Abtragung. In diesem Fall weist die Hausgerätekomponente zumindest ein, vorzugsweise von außen sichtbares, Dekorelement auf.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine als Hausgerätetürfrontblende ausgebildete Hausgerätekomponente in einer schematischen Frontansicht,
- Fig. 2: die Hausgerätekomponente in einer schematischen Rückansicht,
- Fig. 3: die Hausgerätekomponente in einer schematischen Schnittansicht entlang einer Linie III-III in Figur 1,
- Fig. 4: ein zumindest im Wesentlichen geschlossenes Formwerkzeug zur Herstellung der Hausgerätekomponente,
- Fig. 5: ein erster Verfahrensschritt eines Hausgerätekomponentenherstellverfahrens zur Herstellung der Hausgerätekomponente,
- Fig. 6: das Formwerkzeug in einem teilweise geöffneten Zustand,
- Fig. 7: ein zweiter Verfahrensschritt des Hausgerätekomponentenherstellverfahrens zur Herstellung der Hausgerätekomponente,
- Fig. 8: eine weitere als Hausgerätetürfrontblende ausgebildete Hausgerätekomponente in einer schematischen Frontansicht,
- Fig. 9: die Hausgerätekomponente aus Figur 8 in einer schematischen Rückansicht,
- Fig. 10: die Hausgerätekomponente aus Figur 8 in einer schematischen Schnittansicht entlang einer Linie X-X in Figur 8,
- Fig. 11: eine Lagervertiefung der Hausgerätekomponente aus Figur 8 in einer vergrößerten Ansicht,
- Fig. 12: die Lagervertiefung aus Figur 11 in einer seitlichen Schnittansicht entlang einer Linie XII-XII in Figur 11,
- Fig. 13: eine Griffvertiefung der Hausgerätekomponente aus Figur 8 in einer vergrößerten Ansicht,
- Fig. 14: die Griffvertiefung aus Figur 13 in einer schematischen Schnittansicht entlang einer Linie XIV-XIV in Figur 13 von schräg unten,
- Fig. 15: ein Dekorelement der Hausgerätekomponente aus Figur 8 in einer vergrößerten Ansicht
- Fig. 16: ein erstes zumindest im Wesentlichen geschlossenes Formwerkzeug zur Herstellung der Hausgerätekomponente aus Figur 8,
- Fig. 17: ein erster Verfahrensschritt eines Hausgerätekomponentenherstellverfahrens zur Herstellung der Hausgerätekomponente aus Figur 8,
- Fig. 18: ein zweites zumindest im Wesentlichen geschlossenes Formwerkzeug zur Herstellung der Hausgerätekomponente aus Figur 8 und
- Fig. 19: ein zweiter Verfahrensschritt des Hausgerätekomponentenherstellverfahrens zur Herstellung der Hausgerätekomponente.

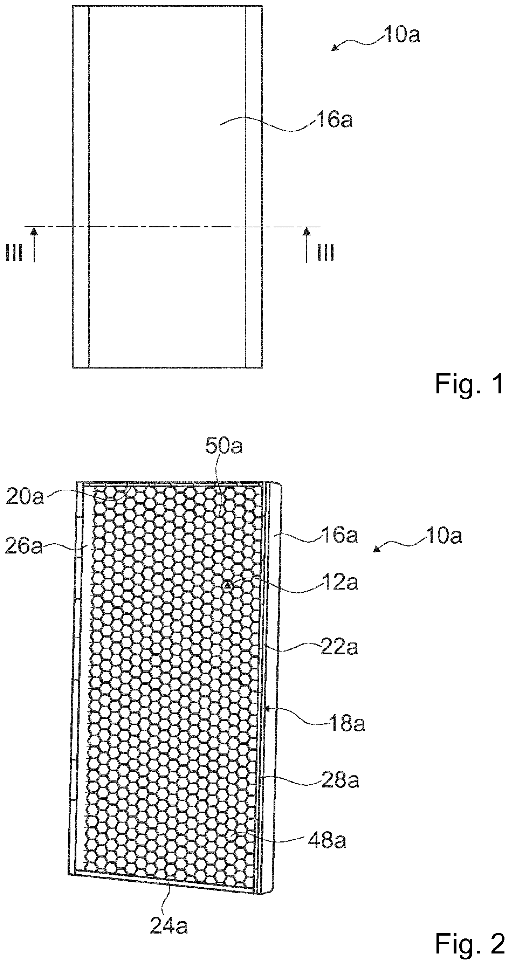

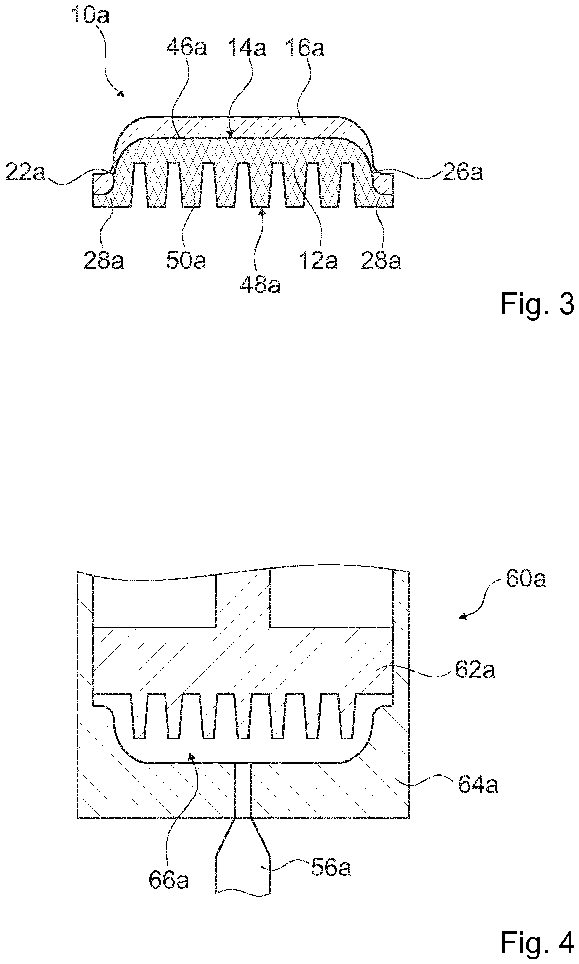

Die Figuren 1 bis 3 zeigen eine als Hausgerätetürfrontblende ausgebildete Hausgerätekomponente 10a in einer schematischen Frontansicht (Figur 1), einer schematischen Rückansicht (Figur 2) und einer schematischen Schnittansicht (Figur 3). Die Hausgerätekomponente 10a ist als Hausgerätetürfrontblende ausgebildet. Eine Hausgerätetüre eines Hausgeräts umfasst, neben der Hausgerätekomponente 10a, eine Hausgerätetürrückblende (nicht dargestellt) sowie ein Isoliermaterial (nicht dargestellt), welches zwischen der Hausgerätekomponente 10a und der Hausgerätetürrückblende angeordnet ist. Im vorliegenden Fall ist das Hausgerät als Kältegerät ausgebildet. Das Hausgerät ist auf bekannte Art und Weise dazu vorgesehen, Lebensmittel und andere Kühlgüter zu kühlen. Im vorliegenden Fall ist das Hausgerät als ein Standgerät ausgebildet. Alternativ ist denkbar, dass ein Hausgerät als ein Einbaugerät ausgebildet ist.

Die Hausgerätekomponente 10a weist einen Grundkörper 12a auf. Der Grundkörper 12a ist als Spritzgussteil ausgebildet. Der Grundkörper 12a besteht aus einem Thermoplast. Im vorliegenden Fall besteht der Grundkörper 12a aus Kunststoff. Der Grundkörper 12a ist zumindest im Wesentlichen plattenartig ausgebildet. Der Grundkörper 12a weist eine Höhe von etwa 170 cm auf. Der Grundkörper 12a weist eine Breite von etwa 55 cm auf. Der Grundkörper 12a weist eine maximale Tiefe von etwa 10 cm auf. Der Grundkörper 12a weist eine Frontseite 46a auf (vgl. Figur 3). Die Frontseite 46a ist zumindest im Wesentlichen glatt ausgebildet. Ferner weist der Grundkörper 12a eine Rückseite 48a auf. Der Grundkörper 12a weist vier Seitenflanken 20a, 22a, 24a, 26a auf. Die Seitenflanken 20a, 22a, 24a, 26a sind zumindest im Wesentlichen glatt ausgebildet. Die Frontseite 46a und die Seitenflanken 20a, 22a, 24a, 26a definieren dabei eine Außenfläche des Grundkörpers 12a. Ferner begrenzen die Rückseite 48a und die Seitenflanken 20a, 22a, 24a, 26a zumindest im Wesentlichen einen Isoliermaterialaufnahmeraum.

Die Frontseite 46a ist auf einer dem Isoliermaterialaufnahmeraum abgewandten Seite des Grundkörpers 12a angeordnet. Die Frontseite 46a ist in einem vollständig montierten Zustand des Hausgeräts auf einer dem Isoliermaterial abgewandten Seite des Hausgeräts angeordnet. Die Rückseite 48a ist auf einer dem Isoliermaterialaufnahmeraum zugewandten Seite des Grundkörpers 12a angeordnet. Die Rückseite 48a ist in einem vollständig montierten Zustand des Hausgeräts auf einer dem Isoliermaterial zugewandten Seite des Hausgeräts angeordnet.

Ferner weist die Hausgerätekomponente 10a mehrere Verstärkungsrippen 50a auf. Die Verstärkungsrippen 50a sind an der Rückseite 48a des Grundkörpers 12a angeordnet. Die Verstärkungsrippen 50a sind einstückig mit dem Grundkörper 12a, insbesondere der Rückseite 48a, ausgebildet. Die Verstärkungsrippen 50a sind zumindest im Wesentlichen in dem Isoliermaterialaufnahmeraum angeordnet. Die Verstärkungsrippen 50a erstrecken sich zumindest im Wesentlichen über die gesamte Rückseite 48a. Die Verstärkungsrippen 50a sind als Erhöhungen ausgebildet. Die Verstärkungsrippen 50a sind zumindest im Wesentlichen wabenförmig angeordnet. Alternativ ist auch denkbar, auf Verstärkungsrippen zu verzichten und/oder Verstärkungsrippen in einer anderen Form anzuordnen, insbesondere schachbrettförmig und/oder rautenförmig.

Ferner weist die Hausgerätekomponente 10a eine Diffusionssperre 18a auf. Die Diffusionssperre 18a ist mit dem Grundkörper 12a verbunden. Die Diffusionssperre 18 ist im vorliegenden Fall einstückig mit dem Grundkörper 12a verbunden. Die Diffusionssperre 18a weist ferner zumindest ein Diffusionssperrelement 28a auf. Im vorliegenden Fall weist die Diffusionssperre 18a genau ein Diffusionssperrelement 28a auf. Das Diffusionssperrelement 28a ist kragenartig ausgebildet. Das Diffusionssperrelement 28a ist zumindest an einer der Seitenflanken 20a, 22a, 24a, 26a angeordnet. Im vorliegenden Fall erstreckt sich das Diffusionssperrelement 28a vollständig entlang der vier Seitenflanken 20a, 22a, 24a, 26a. Das Diffusionssperrelement 28a ist in einem Nahbereich der Rückseite 48a angeordnet. Das Diffusionssperrelement 28a ist in einer Blickrichtung parallel zu einer Kante der Seitenflanken 20a, 22a, 24a, 26a erhöht ausgebildet. Das Diffusionssperrelement 28a ist dabei in einem Vergleich zu den Seitenflanken 20a, 22a, 24a, 26a, insbesondere in einer Richtung senkrecht zu einer Oberfläche der jeweiligen Seitenflanke 20a, 22a, 24a, 26a, um 0,3 mm erhöht ausgebildet. Ferner weist das Diffusionssperrelement 28a eine Materialstärke, insbesondere in einer Richtung senkrecht zu einer Oberfläche der Frontseite 46a, von 5 mm auf. Das Diffusionssperrelement 28a ist im vorliegenden Fall dazu vorgesehen, einen Oberflächenteilbereich 14a zu begrenzen.

Des Weiteren weist die Hausgerätekomponente 10a eine Schichteinheit 16a auf. Die Schichteinheit 16a weist genau eine Schicht auf. Die Schichteinheit 16a besteht aus einem hochwertigen Material. Die Schichteinheit 16a besteht aus Polyurea. Die Schichteinheit 16a weist eine Dicke von 0,3 mm auf. Die Schichteinheit 16a bedeckt etwa 60 % einer gesamten Oberfläche des Grundkörpers 12a. Die Schichteinheit 16a ist auf dem Oberflächenteilbereich 14a angeordnet. Dabei bilden das Diffusionssperrelement 28a und der Grundkörper 12a einen Aufnahmebereich für die Schichteinheit 16a. Die Schichteinheit 16a bedeckt zumindest im Wesentlichen die Außenfläche des Grundkörpers 12a. Die Schichteinheit 16a bedeckt im vorliegenden Fall etwa 98 % der Außenfläche des Grundkörpers 12a. Die Schichteinheit 16a bedeckt dabei die Frontseite 46a vollständig. Ferner bedeckt die Schichteinheit 16a die Seitenflanken 20a, 22a, 24a, 26a zumindest im Wesentlichen vollständig. Im vorliegenden Fall ist die Schichteinheit 16a als Hausgerätedekorblende ausgebildet. Alternativ ist denkbar, dass eine Schichteinheit mehrere Schichten aufweist. Ferner ist denkbar, eine weitere Schicht auf einen Grundkörper aufzubringen, insbesondere eine Schutzschicht, wie beispielweise Klarlack.

Die Hausgerätekomponente 10a ist ferner umschlagsymmetrisch ausgebildet. Die Hausgerätekomponente 10a ist spiegelsymmetrisch bezüglich einer Mittelebene ausgebildet. Die Mittelebene ist parallel zu zumindest einer der Seitenflanken 20a, 22a, 24a, 26a ausgerichtet und schneidet einen geometrischen Mittelpunkt der Hausgerätekomponente 10a. Im vorliegenden Fall ist die Mittelebene parallel zu den Seitenflanken 22a, 26a ausgerichtet und schneidet den geometrischen Mittelpunkt der Hausgerätekomponente 10a. Demnach kann die Hausgerätetüre, welche in einem montierten Zustand insbesondere die Hausgerätekomponente 10a aufweist, beidseitig mit einem Hausgerätegehäuse verbunden werden.

Ferner ist denkbar zusätzliche Funktionselemente, wie beispielweise Touchbedienelemente, und/oder zusätzliche Befestigungselemente, wie beispielweise Griffelemente und/oder Lagerelemente, an einer Hausgerätekomponente anzuordnen und/oder zu befestigen, insbesondere zu verschrauben.

Die Hausgerätekomponente 10a wird in einem Mehrkomponenten-Spritzgussverfahren hergestellt. Im vorliegenden Fall wird die Hausgerätekomponente 10a in einem Zweikomponenten-Spritzgussverfahren hergestellt. Demnach werden zwei Materialkomponenten 52a, 54a verwendet. Im vorliegenden Fall wird für jede Materialkomponente 52a, 54a eine Düseneinheit 56a, 58a verwendet. Die Figuren 4 bis 8 zeigen schematisch die einzelnen Schritte des Hausgerätekomponentenherstellverfahrens.

Figur 4 zeigt ein zumindest im Wesentlichen geschlossenes Formwerkzeug 60a vor einem Herstellprozess. Das Formwerkzeug 60a weist zwei Formwerkzeugteile 62a, 64a auf. Eines der Formwerkzeugteile 62a, 64a ist beweglich ausgebildet. Im vorliegenden Fall ist ein oberes Formwerkzeugteil 62a beweglich ausgebildet. Das Formwerkzeug 60a weist eine Kavität 66a auf. Die Kavität 66a ist als eine Negativform zu einer Kontur des Grundkörpers 12a ausgebildet. Die Kavität 66a legt somit eine Kontur und/oder eine Oberflächenstruktur des Grundkörpers 12a fest.

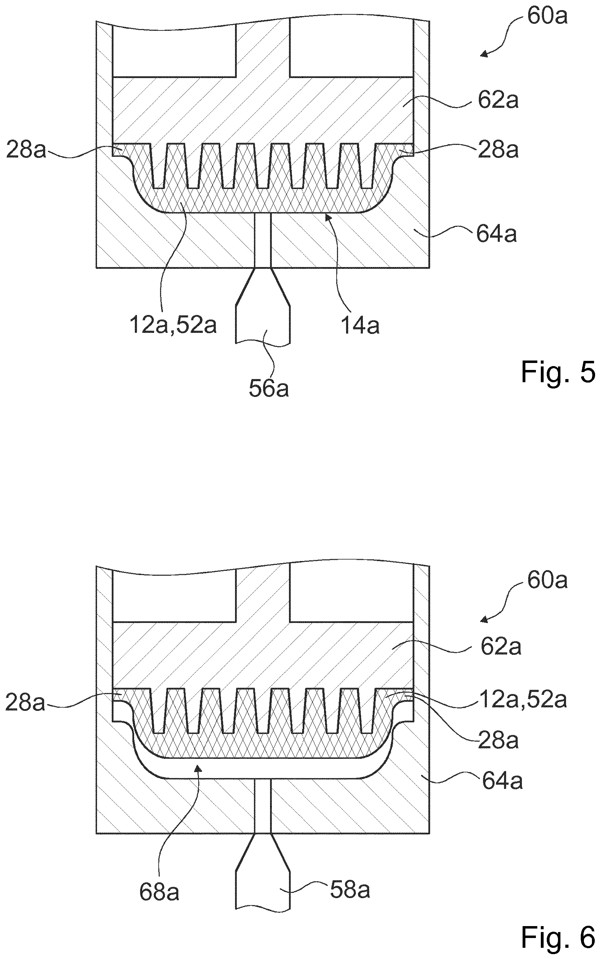

Figur 5 zeigt einen ersten Verfahrensschritt des Zweikomponenten-Spritzgussverfahrens. Zunächst wird das Formwerkzeug 60a auf eine Temperatur von etwa 80°C bis 90°C gebracht. Anschließend wird die erste Materialkomponente 52a auf etwa 220°C erhitzt und über die erste Düseneinheit 56a in das zumindest im Wesentlichen geschlossene Formwerkzeug 60a gedrückt. Als erste Materialkomponente 52a wird ein Thermoplast verwendet. Aus der ersten Materialkomponente 52a wird der Grundkörper 12a gebildet. Der Grundkörper 12a wird dabei zumindest im Wesentlichen plattenartig ausgebildet. Ferner wird in dem gleichen Verfahrensschritt eine Diffusionssperre 18a, im vorliegenden Fall insbesondere genau ein Diffusionssperrelement 28a, an den Grundkörper 12a angeformt. Das Diffusionssperrelement 28a wird im vorliegenden Fall an die Seitenflanken 20a, 22a, 24a, 26a des Grundkörpers 12a angeformt. Dabei wird das Diffusionssperrelement 28a kragenartig entlang der Seitenflanken 20a, 22a, 24a, 26a des Grundkörpers 12a ausgebildet. Das Diffusionssperrelement 28a und der Grundkörper 12a werden dabei einstückig ausgebildet. Ferner wird die Diffusionssperre 18a derart an den Grundkörper 12a angeformt, dass der wenigstens eine Oberflächenteilbereich 14a begrenzt wird. Anschließend wird das Formwerkzeug 60a teilweise geöffnet (vgl. Figur 6). Durch das teilweise Öffnen des Formwerkzeugs 60a wird eine weitere Kavität 68a in dem Formwerkzeug 60a geschaffen. Die weitere Kavität 68a wird zumindest im Wesentlichen durch ein unteres Formwerkzeugteil 64a und das Diffusionssperrelement 28a gebildet.

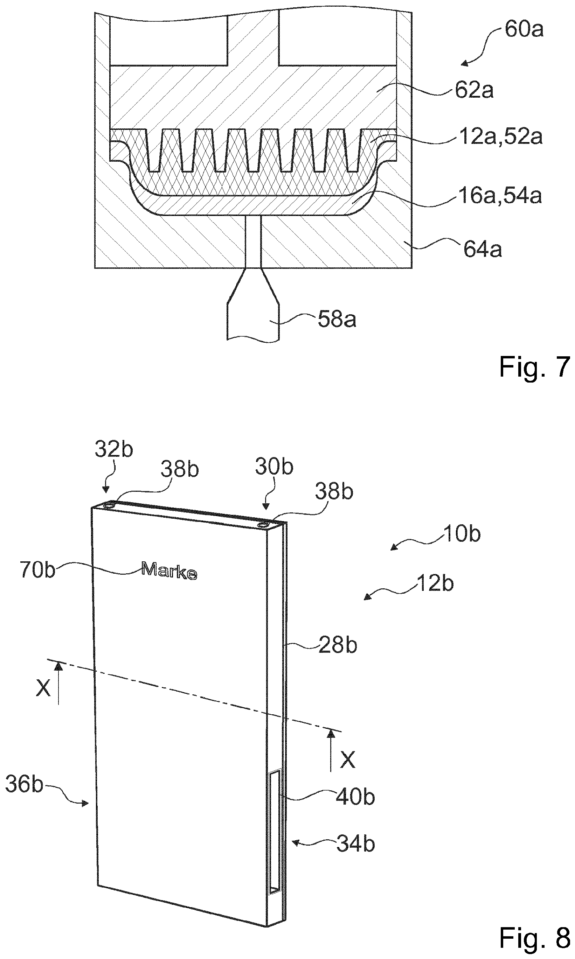

Figur 7 zeigt nun einen zweiten Verfahrensschritt des Zweikomponenten-Spritzgussverfahrens. Der zweite Verfahrensschritt wird bei einer in einem Vergleich zu dem ersten Verfahrensschritt niedrigeren Temperatur durchgeführt. Der zweite Verfahrensschritt wird bei einer Temperatur von etwa 90°C durchgeführt. Dabei wird die zweite Materialkomponente 54a über die zweite Düseneinheit 58a in das zumindest teilweise geöffnete Formwerkzeug 60a, insbesondere die weitere Kavität 68a, gedrückt. Als zweite Materialkomponente 54a wird ein, bei einer Temperatur von etwa 90°C, niederviskoses Material verwendet. Die zweite Materialkomponente 54a weist dabei eine Viskosität von maximal 10 mPa s auf. Im vorliegenden Fall wird als zweite Materialkomponente 54a zumindest im Wesentlichen Polyurea verwendet. Aus der zweiten Materialkomponente 54a wird die Schichteinheit 16a gebildet. Durch die Schichteinheit 16a wird etwa 60 % der Oberfläche des Grundkörpers 12a bedeckt. Dabei bedeckt die Schichteinheit 16a zumindest im Wesentlichen die Außenfläche des Grundkörpers 12a vollständig. Demnach wird die Schichteinheit 16a als eine Hausgerätedekorblende ausgebildet. Nach einer Trocknungszeit von etwa 30 s ist die zweite Materialkomponente 54a vollständig ausgehärtet. Anschließend kann das Formwerkzeug 60a geöffnet und die Hausgerätekomponente 10a entnommen werden. Eine Zykluszeit beträgt im vorliegenden Fall etwa 40 s. Durch dieses Verfahren kann die Schichteinheit 16a kostengünstig sowie hochwertig, insbesondere mit einer hohen Oberflächenqualität und/oder einer hohen Oberflächenbrillanz, ausgebildet werden, wobei eine Gratbildung an einem Randbereich des Grundkörpers 12a verhindert werden kann.

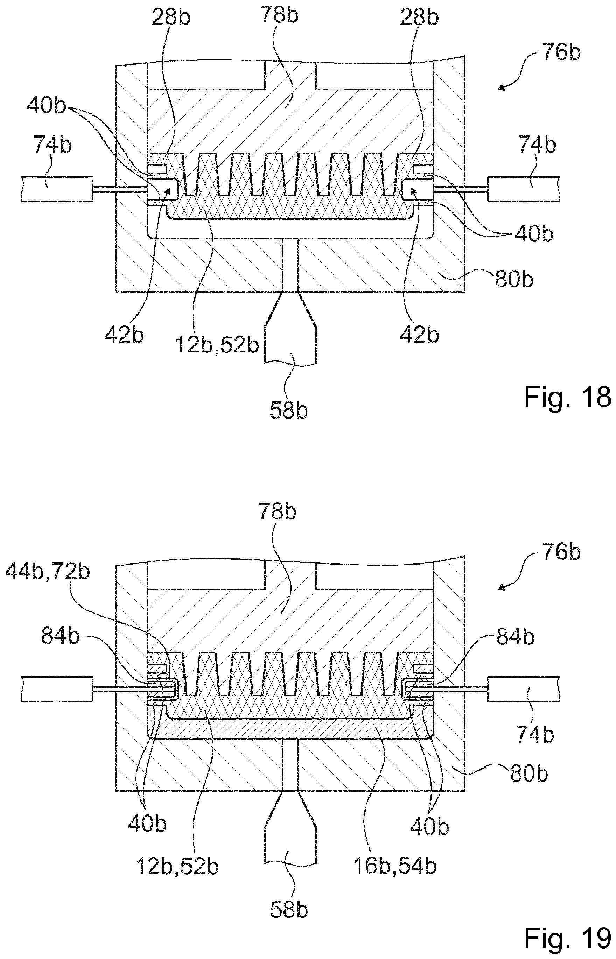

In den Figuren 8 bis 19 ist ein weiteres Ausführungsbeispiel der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung des anderen Ausführungsbeispiels, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Ausführungsbeispielen der Figuren 8 bis 19 ist der Buchstabe a durch den Buchstaben b ersetzt.

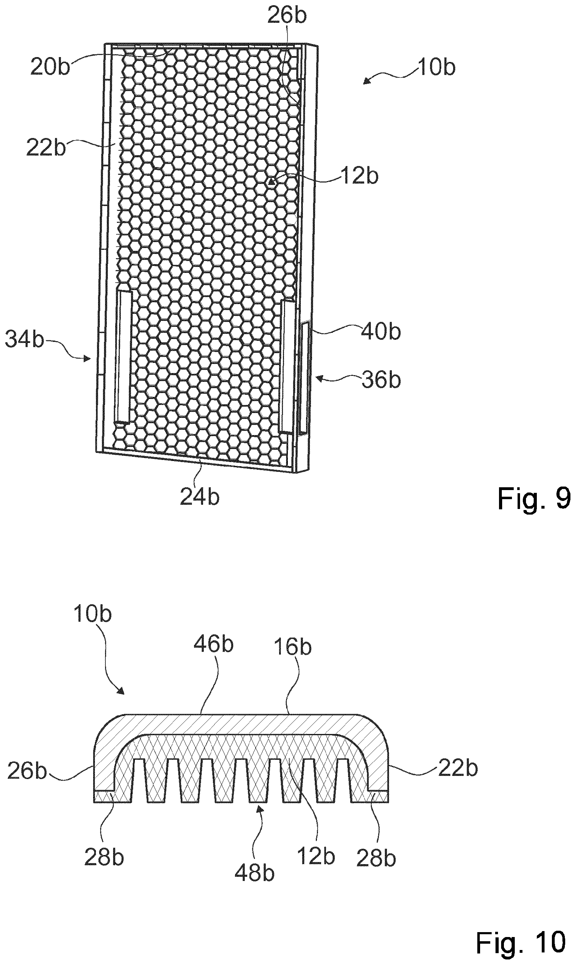

Die Figuren 8 und 9 zeigen eine Hausgerätekomponente 10b in einer schematischen Frontansicht (Figur 8) sowie einer schematischen Rückansicht (Figur 9). Die Hausgerätekomponente 10b ist zu einem Großteil mit einer Hausgerätekomponente 10a des vorherigen Ausführungsbeispiels identisch.

Ein Grundkörper 12b weist mehrere Vertiefungen 30b, 32b, 34b, 36b auf. Im vorliegenden Fall weist der Grundkörper 12b sechs Vertiefungen 30b, 32b, 34b, 36b auf, von denen insbesondere lediglich vier dargestellt sind. Die Vertiefungen 30b, 32b, 34b, 36b sind an Seitenflanken 20b, 22b, 24b, 26b des Grundkörpers 12b angeordnet. Ferner weist die Hausgerätekomponente 10b mehrere weitere Diffusionssperrelemente 38b, 40b auf. Die Vertiefungen 30b, 32b, 34b, 36b sind dabei jeweils durch eines der weiteren Diffusionssperrelemente 38b, 40b abgegrenzt. Im vorliegenden Fall sind vier der Vertiefungen 30b, 32b, 34b, 36b als Lagervertiefungen 30b, 32b ausgebildet. Die Lagervertiefungen 30b, 32b sind im vorliegenden Fall als Lagerbuchsen ausgebildet. Ferner sind zwei der Vertiefungen 30b, 32b, 34b, 36b als Griffvertiefungen 34b, 36b ausgebildet.

Eine erste, insbesondere in einem vollständig montierten Zustand eines Hausgeräts obere, Seitenflanke 20b weist eine erste Lagervertiefung 30b auf. Die erste Seitenflanke 20b weist ferner eine zweite Lagervertiefung 32b auf. Die erste Lagervertiefung 30b ist in einem oberen rechten Eckbereich der Hausgerätekomponente 10b angeordnet. Die zweite Lagervertiefung 32b ist in einem oberen linken Eckbereich der Hausgerätekomponente 10b angeordnet. Eine zweite, insbesondere der ersten Seitenflanke 20b gegenüberliegende, Seitenflanke 24b weist eine dritte Lagervertiefung auf (nicht dargestellt). Die zweite Seitenflanke 24b weist ferner eine vierte Lagervertiefung (nicht dargestellt) auf. Die dritte Lagervertiefung ist in einem unteren rechten Eckbereich der Hausgerätekomponente 10b angeordnet. Die vierte Lagervertiefung ist in einem unteren linken Eckbereich der Hausgerätekomponente 10b angeordnet. Die erste Lagervertiefung 30b und die dritte Lagervertiefung sind dazu vorgesehen, in einem montierten Zustand eine nach rechts öffnende Hausgerätetüre zu lagern. Die zweite Lagervertiefung 32b und die vierte Lagervertiefung sind dazu vorgesehen, in einem montierten Zustand eine nach links öffnende Hausgerätetüre zu lagern. Die erste Lagervertiefung 30b, die zweite Lagervertiefung 32b, die dritte Lagervertiefung und die vierte Lagervertiefung sind identisch.

Ferner weist eine dritte, insbesondere in einer Blickrichtung senkrecht zu einer Frontseite rechte, Seitenflanke 22b eine erste Griffvertiefung 34b auf. Die erste Griffvertiefung 34b ist in einem unteren Bereich der Hausgerätekomponente 10b angeordnet. Eine vierte, insbesondere der zweiten Seitenflanke 22b gegenüberliegende, Seitenflanke 26b weist eine zweite Griffvertiefung 36b auf. Die zweite Griffvertiefung 36b ist in einem unteren Bereich der Hausgerätekomponente 10b angeordnet. Die erste Griffvertiefung 34b ist dazu vorgesehen, in einem montierten Zustand eine nach links öffnende Hausgerätetüre zu Öffnen und/oder zu Schließen. Die zweite Griffvertiefung 36b ist dazu vorgesehen, in einem montierten Zustand eine nach rechts öffnende Hausgerätetüre zu Öffnen und/oder zu Schließen. Die erste Griffvertiefung 34b und die zweite Griffvertiefung 36b sind identisch. Die Hausgerätekomponente 10b ist zumindest im Wesentlichen umschlagsymmetrisch ausgebildet. Die Hausgerätekomponente 10b ist somit zumindest im Wesentlichen spiegelsymmetrisch bezüglich einer Mittelebene ausgebildet.

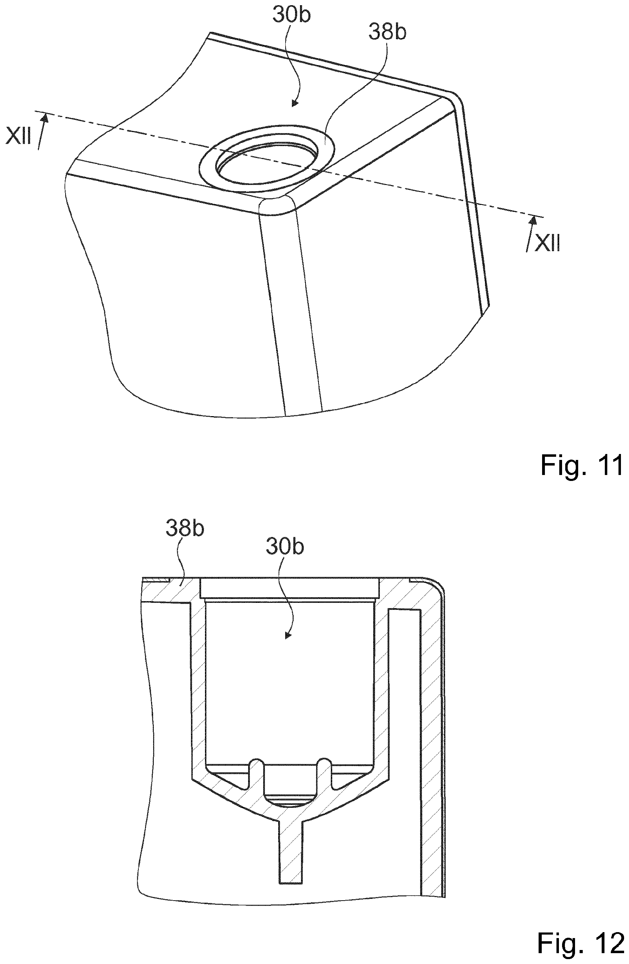

Im Folgenden wird anhand der Figuren 10 und 11 eine der Lagervertiefungen 30b, 32b, insbesondere die erste Lagervertiefung 30b, beschrieben. Die Beschreibung kann jedoch auf die anderen drei Lagervertiefungen 30b, 32b übertragen werden.

Die Lagervertiefung 30b, 32b ist zumindest im Wesentlichen zylinderförmig. Eine Seitenfläche der Lagervertiefung 30b, 32b ist geöffnet. Somit ist die Lagervertiefung 30b, 32b zumindest im Wesentlichen durch zwei Seitenflächen begrenzt. Die Lagervertiefung 30b, 32b weist einen Radius von etwa 0,5 cm auf. Die Lagervertiefung 30b, 32b weist eine Tiefe von etwa 1,5 cm auf. Ferner ist die Lagervertiefung 30b, 32b durch ein erstes weiteres Diffusionssperrelement 38b begrenzt, insbesondere abgegrenzt. Das erste weitere Diffusionssperrelement 38b ist an einer der Seitenflanken 20b, 24b angeordnet. Das erste weitere Diffusionssperrelement 38b ist in einem Vergleich zu den Seitenflanken 20b, 24b, insbesondere in einer Richtung senkrecht zu einer Oberfläche der jeweiligen Seitenflanken 20b, 24b, um 0,3 mm erhöht ausgebildet. Das erste weitere Diffusionssperrelement 38b umschließt die Lagervertiefung 30b, 32b in einer Blickrichtung senkrecht zu der Lagervertiefung 30b, 32b dabei vollständig. Demnach ist das erste weitere Diffusionssperrelement 38b dazu vorgesehen, ein Eindringen einer Schichteinheit 16b in die Lagervertiefung 30b, 32b zu verhindern.

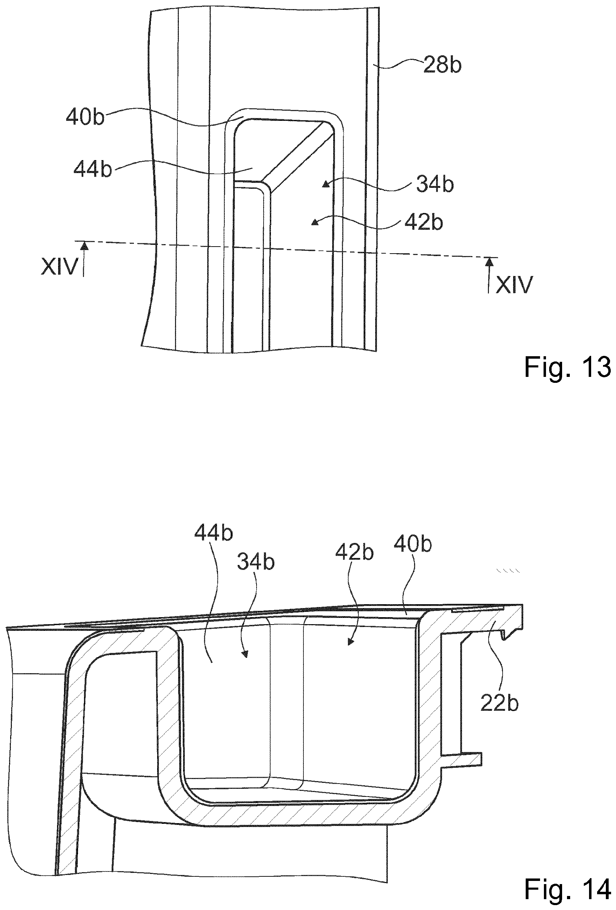

Im Folgenden wird anhand der Figuren 12 und 13 eine der Griffvertiefungen 34b, 36b, insbesondere die erste Griffvertiefung 34b, beschrieben. Die Beschreibung kann jedoch auf die andere Griffvertiefung 36b übertragen werden.

Die Griffvertiefung 34b, 36b ist zumindest im Wesentlichen quaderförmig. Eine Seitenfläche der Griffvertiefung 34b, 36b ist geöffnet. Somit ist die Griffvertiefung 34b, 36b durch fünf Seitenflächen begrenzt. Die Griffvertiefung 34b, 36b weist eine Länge von etwa 35 cm auf. Die Griffvertiefung 34b, 36b weist eine Breite von etwa 6 cm auf. Die Griffvertiefung 34b, 36b weist eine Tiefe von etwa 8 cm auf. Ferner ist die Griffvertiefung 34b, 36b durch ein zweites weiteres Diffusionssperrelement 40b abgegrenzt. Das zweite weitere Diffusionssperrelement 40b ist an einer der Seitenflanken 22b, 26b angeordnet. Das zweite weitere Diffusionssperrelement 40b ist in einem Vergleich zu den Seitenflanken 22b, 26b, insbesondere in einer Richtung senkrecht zu einer Oberfläche der jeweiligen Seitenflanke 22b, 26b, um 0,3 mm erhöht ausgebildet. Das zweite weitere Diffusionssperrelement 40b umschließt die Griffvertiefung 34b, 36b in einer Blickrichtung senkrecht zu der Griffvertiefung 34b, 36b dabei vollständig. Demnach ist das zweite weitere Diffusionssperrelement 40b dazu vorgesehen, einen weiteren Oberflächenteilbereich 42b des Grundkörpers 12b zu begrenzen. Im vorliegenden Fall ist das zweite weitere Diffusionssperrelement 40b dazu vorgesehen, die Griffvertiefung 34b, 36b zu begrenzen. Ferner ist das zweite weitere Diffusionssperrelement 40b dazu vorgesehen, ein Eindringen der Schichteinheit 16b in die Griffvertiefung 34b, 36b zu verhindern.

In dem weiteren Oberflächenteilbereich 42b ist im vorliegenden Fall eine weitere Schichteinheit 44b angeordnet. Dabei bilden das zweite weitere Diffusionssperrelement 40a und die Seitenflächen der Griffvertiefung 34b, 36b einen Aufnahmebereich für die weitere Schichteinheit 44b. Die weitere Schichteinheit 44b weist genau eine Schicht auf. Die weitere Schichteinheit 44b besteht aus einem hochwertigen Material. Die weitere Schichteinheit 44b besteht aus Polyurea. Die weitere Schichteinheit 44b ist zu der Schichteinheit 16b verschieden ausgebildet. Im vorliegenden Fall weist die weitere Schichteinheit 44b eine zu der Schichteinheit 16b verschiedene Oberflächenstruktur auf. Die weitere Schichteinheit 44b weist eine Dicke von 0,4 mm auf. Im vorliegenden Fall ist die weitere Schichteinheit 44b als Hausgerätebedienfläche ausgebildet. Die weitere Schichteinheit 44b ist dazu vorgesehen, in einem vollständig montierten Zustand eines Hausgeräts von einem Bediener zu einer Öffnung des Hausgeräts berührt zu werden.

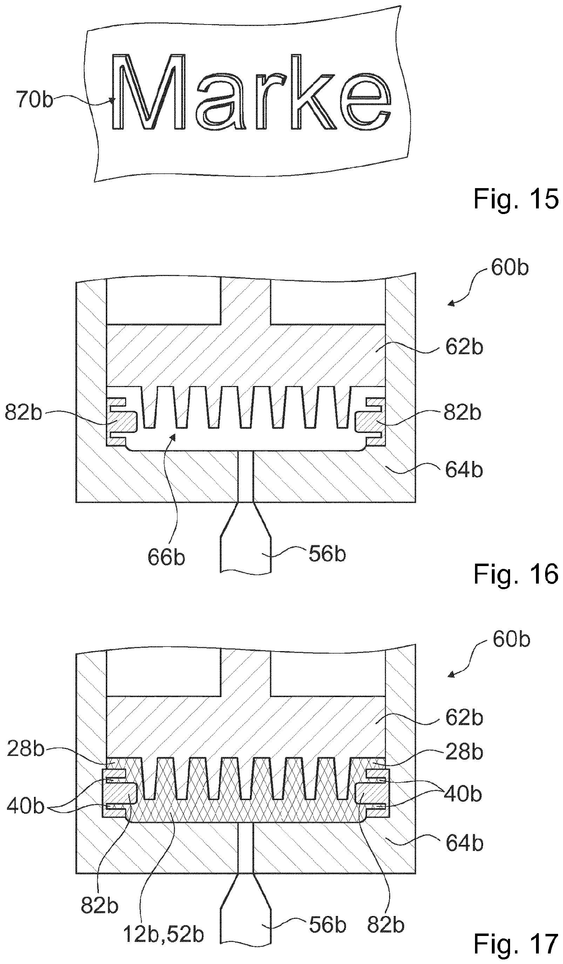

Ferner weist die Hausgerätekomponente 10b im vorliegenden Fall ein Dekorelement 70b auf (vgl. Figur 15). Das Dekorelement 70b ist im vorliegenden Fall unmittelbar in die Schichteinheit 16b eingebracht. Dabei ist die Schichteinheit 16b zumindest teilweise entfernt. Im vorliegenden Fall ist die Schichteinheit 16b mittels eines Lasers entfernt.

Alternativ ist auch denkbar, zumindest ein Dekorelement durch eine Bedruckung und/oder eine Beschichtung zu erhalten. Ferner könnte eine zusätzliche, insbesondere dritte, Schichteinheit in zumindest einer Lagervertiefung angeordnet sein, beispielweise um eine mechanische Stabilität zu erhöhen und/oder eine Gleitlagerung zu verbessern. Ferner ist denkbar, auf eine weitere Schichteinheit in einem weiteren Oberflächenteilbereich, insbesondere in einer Vertiefung, gänzlich zu verzichten und/oder eine weitere Schichteinheit durch ein Lackierverfahren und/oder ein Sprühverfahren aufzubringen. Auch könnte zumindest ein zusätzliches Diffusionssperrelement zentral an einer Hausgerätekomponente, insbesondere entlang einer Längserstreckung und/oder Quererstreckung der Hausgerätekomponente, angeordnet sein, wodurch insbesondere an verschiedenen Oberflächenteilbereichen, insbesondere einer Frontseite, verschiedene Schichteinheiten angeordnet werden können, so dass beispielweise eine Hausgerätekomponente mit zwei unterschiedlichen Farben und/oder zwei unterschiedlichen Oberflächenstrukturen realisiert werden könnte.

Die Hausgerätekomponente 10b wird im vorliegenden Fall in einem Dreikomponenten-Spritzgussverfahren hergestellt. Demnach werden drei Materialkomponenten 52b, 54b, 72b verwendet. Dabei wird für jede Materialkomponente 52b, 54b, 72b eine Düseneinheit 56b, 58b, 74b verwendet.

Die Verfahrensschritte sind zumindest im Wesentlichen zu den Verfahrensschritten eines ersten Ausführungsbeispiels identisch. In diesem Fall werden jedoch zwei zumindest teilweise verschiedene zumindest im Wesentlichen geschlossene Formwerkzeuge 60b, 76b verwendet. Im vorliegenden Fall ist ein erstes oberes Formwerkzeugteil 62b zu einem zweiten oberen Formwerkzeugteil 78b identisch. Demnach unterschiedet sich das zweite Formwerkzeug 76b zumindest durch ein zweites unteres Formwerkzeugteil 80b von dem ersten Formwerkzeug 60b. Ferner weisen die Formwerkzeuge 60b,76b bewegliche Formelemente 82b, 84b auf, welche dazu vorgesehen sind, die Vertiefungen 30b, 32b, 34b, 36b in den Grundkörper 12b einzubringen und/oder die weitere Schichteinheit 44b aufzubringen. Alternativ wäre auch denkbar ein Formwerkzeug mehrteilig, insbesondere dreiteilig und/oder vierteilig auszubilden.

In einem ersten Verfahrensschritt wird der Grundkörper 12b hergestellt. Dabei wird der Grundkörper 12b mit den Vertiefungen 30b, 32b, 34b, 36b versehen. Ferner werden die weiteren Diffusionssperrelemente 38b, 40b an den Grundkörper 12b angeformt. Somit werden die Vertiefungen 30b, 32b, 34b, 36b durch die weiteren Diffusionssperrelemente 38b, 40b abgegrenzt.

Anschließend wird der Grundkörper 12b über eine Transporteinheit (nicht dargestellt) in das zweite Formwerkzeug 76b gebracht. Als Transporteinheit kann dabei beispielweise ein Drehwerkzeug, ein Schiebetisch und/oder eine Wendeplatte verwendet werden.

In einem zweiten Verfahrensschritt wird dann, insbesondere zumindest im Wesentlichen gleichzeitig zu der Schichteinheit 16b, an dem weiteren Oberflächenteilbereich 42b die weitere Schichteinheit 44b aufgebracht. Dabei wird die dritte Materialkomponente 72b über die dritte Düseneinheit 74b in das zweite Formwerkzeug 76b, insbesondere in zumindest eine der Griffvertiefungen 34b, 36b, gedrückt. Als dritte Materialkomponente 72b wird ein, bei einer Temperatur von etwa 90°C, niederviskoses Material verwendet. Die dritte Materialkomponente 72b weist dabei eine Viskosität von maximal 30 mPa·s auf. Im vorliegenden Fall wird als dritte Materialkomponente 72b zumindest im Wesentlichen Polyurea verwendet. Aus der dritten Materialkomponente 72b wird demnach die weitere Schichteinheit 44b gebildet. Im vorliegenden Fall wird die weitere Schichteinheit 44b als eine Hausgerätebedienfläche ausgebildet.

In einem dritten, insbesondere auf den zweiten Verfahrensschritt folgenden, Verfahrensschritt wird die Schichteinheit 16b zumindest teilweise entfernt, wodurch insbesondere das Dekorelement 70b ausgebildet werden kann. Der dritte Verfahrensschritt wird dabei etwa 30 s nach dem zweiten Verfahrensschritt durchgeführt. Alternativ kann ein dritter Verfahrensschritt auch zu einem beliebigen anderen Zeitpunkt nach einem zweiten Verfahrensschritt durchgeführt werden.

### Bezugszeichen

- 10: Hausgerätekomponente
- 12: Grundkörper
- 14: Oberflächenteilbereich
- 16: Schichteinheit
- 18: Diffusionssperre
- 20: Seitenflanke
- 22: Seitenflanke
- 24: Seitenflanke
- 26: Seitenflanke
- 28: Diffusionssperrelement
- 30: Vertiefung
- 32: Vertiefung
- 34: Vertiefung
- 36: Vertiefung
- 38: Diffusionssperrelement
- 40: Diffusionssperrelement
- 42: Oberflächenteilbereich
- 44: Schichteinheit
- 46: Frontseite
- 48: Rückseite
- 50: Verstärkungsrippen
- 52: Materialkomponente
- 54: Materialkomponente
- 56: Düseneinheit
- 58: Düseneinheit
- 60: Formwerkzeug
- 62: Formwerkzeugteil
- 64: Formwerkzeugteil
- 66: Kavität
- 68: Kavität
- 70: Dekorelement
- 72: Materialkomponente
- 74: Düseneinheit
- 76: Formwerkzeug
- 78: Formwerkzeugteil
- 80: Formwerkzeugteil
- 82: Formelement
- 84: Formelement

## Patentansprüche

1. Kältegerätekomponentenherstellverfahren zur Herstellung einer Hausgerätekomponente (10a; 10b), welche zumindest einen Grundkörper (12a; 12b) und zumindest eine an wenigstens einem Oberflächenteilbereich (14a; 14b) des zumindest einen Grundkörpers (12a; 12b) angeordnete Schichteinheit (16a; 16b) umfasst, wobei die Hausgerätekomponente (10a; 10b) in einem Mehrkomponenten-Spritzgussverfahren hergestellt wird, wobei an den zumindest einen Grundkörper (12a; 12b) eine Diffusionssperre (18a; 18b) angeformt wird, wobei die Diffusionssperre (18a; 18b) zumindest ein Diffusionssperrelement (28a; 28b) umfasst und dazu vorgesehen ist, in zumindest einem Zustand zumindest ein niederviskoses Material und/oder zumindest eine niederviskose Flüssigkeit, und zwar die zumindest eine Schichteinheit (16a; 16b), während des Spritzgussverfahrens, in einem zumindest teilweise von der Diffusionssperre (18a; 18b) definierten Bereich des zumindest einen Grundkörpers (12a; 12b) zu halten und/oder einzugrenzen, wobei an wenigstens einem weiteren Oberflächenteilbereich (42b) des zumindest einen Grundkörpers (12b) zumindest eine weitere Schichteinheit (44b) aufgebracht wird und wobei die zumindest eine weitere Schichteinheit (44b) als eine Hausgerätebedienfläche ausgebildet wird.

2. Kältegerätekomponentenherstellverfahren zur Herstellung einer Hausgerätekomponente (10a; 10b), welche zumindest einen Grundkörper (12a; 12b) und zumindest eine an wenigstens einem Oberflächenteilbereich (14a; 14b) des zumindest einen Grundkörpers (12a; 12b) angeordnete Schichteinheit (16a; 16b) umfasst, wobei die Hausgerätekomponente (10a; 10b) in einem Mehrkomponenten-Spritzgussverfahren hergestellt wird, wobei an den zumindest einen Grundkörper (12a; 12b) eine Diffusionssperre (18a; 18b) angeformt wird, wobei die Diffusionssperre (18a; 18b) zumindest ein Diffusionssperrelement (28a; 28b) umfasst und dazu vorgesehen ist, in zumindest einem Zustand zumindest ein niederviskoses Material und/oder zumindest eine niederviskose Flüssigkeit, und zwar die zumindest eine Schichteinheit (16a; 16b), während des Spritzgussverfahrens, in einem zumindest teilweise von der Diffusionssperre (18a; 18b) definierten Bereich des zumindest einen Grundkörpers (12a; 12b) zu halten und/oder einzugrenzen, **dadurch gekennzeichnet, dass** die zumindest eine Schichteinheit (16b) zumindest teilweise entfernt wird

3. Kältegerätekomponentenherstellverfahren nach Anspruch 1 oder 2, **dadurch gekennzeichnet, dass** der zumindest eine Grundkörper (12a; 12b) zumindest im Wesentlichen plattenartig ausgebildet wird.

4. Kältegerätekomponentenherstellverfahren nach einem der vorhergehenden Ansprüche, **dadurch gekennzeichnet, dass** der wenigstens eine Oberflächenteilbereich (14a; 14b) zumindest im Wesentlichen durch die Diffusionssperre (18a; 18b) begrenzt wird.

5. Kältegerätekomponentenherstellverfahren zumindest nach Anspruch 3, **dadurch gekennzeichnet, dass** die Diffusionssperre (18a; 18b) zumindest teilweise an zumindest einer Seitenflanke (20a, 22a, 24a, 26a; 20b, 22b, 24b, 26b) des zumindest im Wesentlichen plattenartigen Grundkörpers (12a; 12b) angeformt wird.

6. Kältegerätekomponentenherstellverfahren zumindest nach Anspruch 3, **dadurch gekennzeichnet, dass** zumindest ein Diffusionssperrelement (28a; 28b) der Diffusionssperre (18a; 18b) kragenartig zumindest im Wesentlichen entlang der Seitenflanken (20a, 22a, 24a, 26a; 20b, 22b, 24b, 26b) des zumindest im Wesentlichen plattenartigen Grundkörpers (12a; 12b) ausgebildet wird.

7. Kältegerätekomponentenherstellverfahren nach einem der vorhergehenden Ansprüche, **dadurch gekennzeichnet, dass** durch die zumindest eine Schichteinheit (16a; 16b) zumindest 10 % einer Oberfläche des zumindest einen Grundkörpers (12a; 12b) bedeckt wird.

8. Kältegerätekomponentenherstellverfahren nach einem der vorherigen Ansprüche, **dadurch gekennzeichnet, dass** die zumindest eine Schichteinheit (16a; 16b) als eine Hausgerätedekorblende ausgebildet wird.

9. Kältegerätekomponentenherstellverfahren nach einem der vorherigen Ansprüche, **dadurch gekennzeichnet, dass** der zumindest eine Grundkörper (12b) mit zumindest einer Vertiefung (30b, 32b, 34b, 36b) versehen wird.

10. Kältegerätekomponentenherstellverfahren nach Anspruch 9, **dadurch gekennzeichnet, dass** die zumindest eine Vertiefung (30b, 32b, 34b, 36b) durch zumindest ein Diffusionssperrelement (38b, 40b) der Diffusionssperre (18b) zumindest teilweise begrenzt wird.

11. Hausgerätekomponente (10a; 10b) in Form einer Kältegerätekomponente, die zumindest teilweise mittels eines Kältegerätekomponentenherstellverfahren nach einem der vorhergehenden Ansprüche hergestellt ist.

12. Haushaltskältegerät, mit zumindest einer Hausgerätekomponente (10a; 10b) nach Anspruch 11.

## Claims

1. Refrigeration appliance component production method for producing a household appliance component (10a; 10b), which comprises at least one base body (12a; 12b) and at least one layer unit (16a; 16b) arranged on at least one surface subregion (14a; 14b) of the at least one base body (12a; 12b), wherein the household appliance component (10a; 10b) is produced in a multicomponent injection moulding process, wherein a diffusion barrier (18a; 18b) is moulded on the at least one base body (12a; 12b), wherein the diffusion barrier (18a; 18b) comprises at least one diffusion barrier element (28a; 28b) and is provided to hold and/or contain, in at least one state, at least one material with low viscosity and/or at least one liquid with low viscosity, namely the at least one layer unit (16a; 16b), during the injection moulding process, in a region of the at least one base body (12a; 12b) that is at least partially defined by the diffusion barrier (18a; 18b), wherein at least one further layer unit (44b) is applied to at least one further surface subregion (42b) of the at least one base body (12b) and wherein the at least one further layer unit (44b) is embodied as a household appliance operating area.

2. Refrigeration appliance component production method for producing a household component (10a; 10b), which comprises at least one base body (12a; 12b) and at least one layer unit (16a; 16b) arranged on at least one surface subregion (14a; 14b) of the at least one base body (12a; 12b), wherein the household appliance component (10a; 10b) is produced in a multicomponent injection moulding process, wherein a diffusion barrier (18a; 18b) is moulded on the at least one base body (12a; 12b), wherein the diffusion barrier (18a; 18b) comprises at least one diffusion barrier element (28a; 28b) and is provided to hold and/or contain, in at least one state, at least one material with low viscosity and/or at least one liquid with low viscosity, namely the at least one layer unit (16a; 16b), during the injection moulding process, in a region of the at least one base body (12a; 12b) that is at least partially defined by the diffusion barrier (18a; 18b), **characterised in that** the at least one layer unit (16b) is at least partially removed.

3. Refrigeration appliance component production method according to claim 1 or 2, **characterised in that** the at least one base body (12a; 12b) is at least substantially embodied in a plate-like manner.

4. Refrigeration appliance component production method according to one of the preceding claims, **characterised in that** the at least one surface subregion (14a; 14b) is at least substantially delimited by the diffusion barrier (18a; 18b).

5. Refrigeration appliance component production method at least according to claim 3, **characterised in that** the diffusion barrier (18a; 18b) is at least partially moulded on at least one side edge (20a, 22a, 24a, 26a; 20b, 22b, 24b, 26b) of the at least substantially plate-like base body (12a; 12b).

6. Refrigeration appliance component production method at least according to claim 3, **characterised in that** at least one diffusion barrier element (28a; 28b) of the diffusion barrier (18a; 18b) is embodied in a collar-like manner at least substantially along the side edge (20a, 22a, 24a, 26a; 20b, 22b, 24b, 26b) of the at least substantially plate-like base body (12a; 12b).

7. Refrigeration appliance component production method according to one of the preceding claims, **characterised in that** at least 10 % of a surface of the at least one base body (12a; 12b) is covered by the at least one layer unit (16a; 16b).

8. Refrigeration appliance component production method according to one of the previous claims, **characterised in that** the at least one layer unit (16a; 16b) is embodied as a household appliance decorative panel.

9. Refrigeration appliance component production method according to one of the previous claims, **characterised in that** the at least one base body (12b) is provided with at least one depression (30b, 32b, 34b, 36b).

10. Refrigeration appliance component production method according to claim 9, **characterised in that** the at least one depression (30b, 32b, 34b, 36b) is at least partially delimited by at least one diffusion barrier element (38b, 40b) of the diffusion barrier (18b).

11. Household appliance component (10a; 10b) in the form of a refrigeration appliance component, which is at least partially produced by means of a refrigeration appliance component production method according to one of the preceding claims.

12. Household refrigeration appliance with at least one household appliance component (10a; 10b) according to claim 11.

## Revendications

1. Procédé de fabrication de composants d'appareil frigorifique pour la fabrication d'un composant d'appareil ménager (10a ; 10b), lequel comprend au moins un corps de base (12a ; 12b) et au moins une unité de couche (16a ; 16b) disposée en au moins une zone de surface partielle (14a ; 14b) de l'au moins un corps de base (12a ; 12b), dans lequel le composant d'appareil ménager (10a ; 10b) est fabriqué selon un procédé de moulage par injection à plusieurs composants, dans lequel une barrière de diffusion (18a ; 18b) est formée sur l'au moins un corps de base (12a ; 12b), dans lequel la barrière de diffusion (18a ; 18b) comprend au moins un élément formant barrière de diffusion (28a ; 28b) et est prévue afin de maintenir et/ou circonscrire, dans au moins un état au moins une matière à faible viscosité et/ou au moins un fluide à faible viscosité, à savoir l'au moins une unité de couche (16a ; 16b), durant le procédé de moulage par injection, dans une zone de l'au moins un corps de base (12a ; 12b) au moins partiellement défini par la barrière de diffusion (18a ; 18b), dans lequel au moins une unité de couche supplémentaire (44b) est apposée en au moins une zone de surface partielle supplémentaire (42b) de l'au moins un corps de base (12b) et dans lequel l'au moins une unité de couche supplémentaire (44b) est formée sous la forme d'une surface de commande d'appareil ménager.

2. Procédé de fabrication de composants d'appareil frigorifique pour la fabrication d'un composant d'appareil ménager (10a ; 10b), lequel comprend au moins un corps de base (12a ; 12b) et au moins une unité de couche (16a ; 16b) disposée en au moins une zone de surface partielle (14a ; 14b) de l'au moins un corps de base (12a ; 12b), dans lequel le composant d'appareil ménager (10a ; 10b) est fabriqué selon un procédé de moulage par injection à plusieurs composants, dans lequel une barrière de diffusion (18a ; 18b) est formée sur l'au moins un corps de base (12a ; 12b), dans lequel la barrière de diffusion (18a ; 18b) comprend au moins un élément formant barrière de diffusion (28a ; 28b) et est prévue afin de maintenir et/ou circonscrire, dans au moins un état au moins une matière à faible viscosité et/ou au moins un fluide à faible viscosité, à savoir l'au moins une unité de couche (16a ; 16b), durant le procédé de moulage par injection, dans une zone de l'au moins un corps de base (12a ; 12b) au moins partiellement défini par la barrière de diffusion (18a ; 18b), **caractérisé en ce que** l'au moins une unité de couche (16b) est au moins partiellement enlevée.

3. Procédé de fabrication de composants d'appareil frigorifique selon la revendication 1 ou 2, **caractérisé en ce que** l'au moins un corps de base (12a ; 12b) est formé au moins essentiellement sous forme de plaque.

4. Procédé de fabrication de composants d'appareil frigorifique selon l'une des revendications précédentes, **caractérisé en ce que** l'au moins une zone de surface partielle (14a ; 14b) est au moins essentiellement limitée par la barrière de diffusion (18a; 18b).

5. Procédé de fabrication de composants d'appareil frigorifique au moins selon la revendication 3, **caractérisé en ce que** la barrière de diffusion (18a ; 18b) est au moins partiellement formée en au moins un flanc latéral (20a, 22a, 24a, 26a; 20b, 22b, 24b, 26b) du corps de base (12a ; 12b) au moins essentiellement en forme de plaque.

6. Procédé de fabrication de composants d'appareil frigorifique au moins selon la revendication 3, **caractérisé en ce qu'**au moins un élément formant barrière de diffusion (28a ; 28b) de la barrière de diffusion (18a ; 18b) est formé en collerette au moins essentiellement le long des flancs latéraux (20a, 22a, 24a, 26a ; 20b, 22b, 24b, 26b) du corps de base (12a ; 12b) au moins essentiellement en forme de plaque.

7. Procédé de fabrication de composants d'appareil frigorifique selon l'une des revendications précédentes, **caractérisé en ce que** l'au moins une unité de couche (16a ; 16b) couvre au moins 10 % d'une surface de l'au moins un corps de base (12a; 12b).

8. Procédé de fabrication de composants d'appareil frigorifique selon l'une des revendications précédentes, **caractérisé en ce que** l'au moins une unité de couche (16a ; 16b) est formée sous la forme d'un bandeau décoratif d'appareil ménager.

9. Procédé de fabrication de composants d'appareil frigorifique selon l'une des revendications précédentes, **caractérisé en ce que** l'au moins un corps de base (12b) est doté d'au moins un approfondissement (30b, 32b, 34b, 36b).

10. Procédé de fabrication de composants d'appareil frigorifique selon la revendication 9, **caractérisé en ce que** l'au moins un approfondissement (30b, 32b, 34b, 36b) est au moins partiellement limité par au moins un élément formant barrière de diffusion (38b, 40b) de la barrière de diffusion (18b).

11. Composant d'appareil ménager (10a ; 10b) sous la forme d'un composant d'appareil frigorifique, au moins partiellement fabriqué au moyen d'un procédé de fabrication de composants d'appareil frigorifique selon l'une des revendications précédentes.

12. Appareil frigorifique ménager, avec au moins un composant d'appareil ménager (10a ; 10b) selon la revendication 11.
